# FASCICULE DE BREVET EUROPEEN

(11) **EP 3 768 960 B1**
(45) Date de publication et mention de la délivrance du brevet: **13.07.2022**
(21) Numéro de dépôt: 19718425.2
(22) Date de dépôt: 18.03.2019
(51) Int. Cl.: F02K 1/72, B64D 29/08, B64D 29/06

(54) **ENSEMBLE PROPULSIF À DOUBLE FLUX, COMPRENANT UN INVERSEUR DE POUSSÉE À GRILLES MOBILES**
TURBOLÜFTERANTRIEBSANORDNUNG MIT SCHUBUMKEHRER MIT BEWEGLICHEN LEITSCHAUFELN
TURBOFAN PROPULSION ASSEMBLY COMPRISING A THRUST REVERSER WITH MOVABLE VANES

(30) Priorité: 19.03.2018 FR 1852327
(43) Date de publication de la demande: 27.01.2021
(73) Titulaire: SAFRAN AIRCRAFT ENGINES, 75015 Paris (FR); Safran Nacelles, 76700 Gonfreville-l'Orcher (FR)
(72) Inventeur: GARNAUD, Quentin, 77550 MOISSY-CRAMAYEL (FR); GLEMAREC, Guillaume, 77550 MOISSY-CRAMAYEL (FR); BOILEAU, Patrick, 76700 GONFREVILLE L'ORCHER (FR); TOUPET, Ludovic, 77550 MOISSY-CRAMAYEL (FR)
(74) Mandataire: Germain Maureau
(86) Numéro de dépôt international: PCT/FR2019/050606
(87) Numéro de publication internationale: WO 2019/180360

(56) Documents cités:
- EP-A1- 0 540 193
- EP-A1- 3 205 869
- FR-A1- 2 999 239
- US-A1- 2014 234 090

## Description

La présente invention se rapporte à un ensemble propulsif à double flux, comprenant un inverseur de poussée à grilles mobiles.

On connaît de la technique antérieure des inverseurs de poussée à grilles mobiles, dans lesquels les grilles permettant de renvoyer vers l'avant une partie de la poussée engendrée par l'ensemble propulsif, sont mobiles entre une position jet direct, dans laquelle elles sont rangées autour du carter intermédiaire du moteur, et une position jet inverse, dans laquelle elles ont coulissé en aval de ce carter intermédiaire, permettant de mettre en œuvre la fonction d'inversion de poussée.

Ces inverseurs de poussée à grilles mobiles répondent notamment au besoin croissant de réaliser des ensembles propulsifs courts, permettant notamment d'optimiser la consommation en carburant.

Une difficulté rencontrée lors des opérations de maintenance avec de tels inverseurs de poussée réside dans le fait qu'une partie des organes du moteur, incluant des équipements, sont recouverts par une structure interne de capotage du moteur, souvent désignée par « IFS » pour « Inner Fan Structure ». La structure interne de capotage, qui peut être considérée comme une partie interne de la nacelle de l'ensemble propulsif, réalise un carénage aérodynamique du moteur et définit la paroi radialement intérieure d'une veine de flux froid. Du fait que certains organes du moteur recouverts par la structure interne de capotage sont situés au droit de l'ensemble formé par les bielles et les volets d'inversion de poussée, ces organes sont difficiles d'accès lors des opérations de maintenance, nécessitant des opérations de démontage et de remontage de la structure interne de capotage qui sont complexes et chronophages.

On connaît du document antérieur FR2936494 un ensemble propulsif comprenant un inverseur de poussée dont une partie des grilles d'inversion de poussée et de la structure interne de capotage du moteur peut s'ouvrir en pivotant vers l'extérieur pour les opérations de maintenance. EP0540193, FR2999239, US2014234090 et EP3205869 divulguent des ensembles propulsifs avec inverseurs de poussée selon l'art antérieur.

Toutefois, le dispositif divulgué par ce document antérieur n'est pas applicable au cas d'un ensemble propulsif comprenant un inverseur de poussée à grilles mobiles, dans lequel l'agencement particulier des bielles et des volets d'inversion de poussée nécessite une conception tout à fait spécifique pour permettre d'accéder à certains organes situés entre le moteur et la structure interne de capotage du moteur.

La présente invention vise à fournir une solution répondant à ce besoin. On atteint ce but avec un ensemble propulsif à double flux, comprenant :
- un moteur et,
- disposée autour de ce moteur, une nacelle définissant une veine de flux froid, cette nacelle comportant :
   - un berceau de nacelle, destiné à être relié à un mât de suspension dudit ensemble propulsif,
   - un inverseur de poussée comprenant des grilles et au moins un capot, montés coulissants par rapport au berceau de nacelle, ainsi que des volets d'inversion de poussée et des bielles d'actionnement de ces volets,
   - une structure interne enveloppant ledit moteur, et définissant, avec ledit capot mobile, une partie de ladite veine de flux froid,
- une bifurcation de passage de servitudes s'étendant entre ledit moteur et l'extérieur de ladite nacelle, diamétralement opposée audit berceau de nacelle, cet ensemble propulsif étant remarquable en ce que :
- ledit inverseur de poussée comprend deux demi-viroles structurantes disposées en aval desdites grilles, et solidaires de celles-ci,
- ladite structure interne comprend deux demi-structures internes amont, reliées par leurs extrémités auxdites demi-viroles de sorte à former deux demi-tronçons de veine de flux froid, ces deux demi-tronçons étant montés pivotants sur ledit berceau de nacelle,
- lesdits volets d'inversion de poussée sont montés articulés sur lesdites demi-viroles,
- lesdites bielles sont montées articulées sur lesdits volets d'inversion de poussée et sur lesdites demi-structures internes amont,
- ladite bifurcation s'étend axialement sur une longueur correspondant sensiblement à celle desdits demi-tronçons de veine de flux froid,
- lesdits demi-tronçons de veine de flux froid sont mobiles entre une position de service dans laquelle ils s'appuient sur et de part et d'autre de ladite bifurcation, et une position de maintenance, dans laquelle ils sont pivotés vers l'extérieur de la nacelle, permettant l'accès à la partie du moteur située sous lesdites demi-structures internes amont.

Grâce à ces caractéristiques, chaque demi-tronçon de veine de flux froid formé par les deux demi-viroles structurantes, les deux demi-parties amont de structure interne, les volets d'inversion de poussée et les bielles d'actionnement de ces volets, constitue un ensemble rigide qui, lorsqu'il est pivoté vers l'extérieur de la nacelle pour les opérations de maintenance, emporte de concert tous les organes susceptibles de gêner l'accès à certaines parties du moteur.

De plus, et de manière très avantageuse, cet agencement particulier en deux demi-tronçons de veine de flux froid dans lequel ces demi-tronçons viennent s'appuyer sur une bifurcation dont la longueur axiale peut correspondre sensiblement à celle de ces demi-tronçons, permet de conserver une bifurcation de section suffisante pour réaliser la fonction de passage de servitudes (conduits, câbles,...) entre le moteur et la nacelle de l'ensemble propulsif, en réduisant le plus possible la trainée aérodynamique de cette bifurcation dans la veine de flux froid.

Suivant des caractéristiques optionnelles de l'ensemble propulsif selon l'invention, ledit capot comprend deux demi-capots, la partie de ladite structure interne située en aval desdits demi-structures internes amont comprend elle-même deux demi-structures internes aval, lesdits demi-capots d'une part, et lesdites demi-structures internes aval sont montés pivotants respectivement sur ledit berceau de nacelle entre une position de service dans laquelle ces demi-capots et ces demi-structures internes aval sont respectivement jointifs bords-à-bords en aval de ladite bifurcation et définissent un tronçon aval de veine de flux froid, et une position de maintenance dans laquelle ils sont pivotés vers l'extérieur de la nacelle, permettant l'accès à la partie du moteur située sous lesdites demi-structures internes aval.

Grâce à ces caractéristiques, dans la zone située en aval des demi-tronçons de veine flux froid, le maintien en position fermée, c'est-à-dire en position de service des demi-capots et des demi-parties aval de la structure interne, ne nécessite pas de bifurcation : ces demi-capots d'une part et ces demi-parties aval d'autre part, peuvent être directement reliés l'un à l'autre par des verrous, de sorte que l'on peut libérer la veine de flux froid de tout obstacle dans la zone située en aval des demi- tronçons de flux froid.

Suivant d'autres caractéristiques optionnelles de l'ensemble propulsif selon l'invention, ladite bifurcation s'étend axialement sur une longueur correspondant sensiblement à celle desdits demi-tronçons de veine de flux froid.

D'autres caractéristiques et avantages de la présente invention apparaîtront à la lumière de la description qui va suivre, et à l'examen des figures ci-annexées, dans lesquelles :
- les figures 1 et 2 représentent, de manière schématique et en demi-coupes axiales, le principe général de fonctionnement d'un inverseur de poussée à grilles coulissantes, en positions respectivement jet direct et jet inverse ;
- la figure 3 représente, en demi-coupe axiale, un ensemble propulsif selon l'invention, comprenant une nacelle et un moteur;
- les figures 4 et 5 représentent, en perspective, le demi-tronçon gauche de veine de flux froid et la demi-partie aval gauche de structure interne de la nacelle, en positions respectivement de service et de maintenance ;
- les figures 4a et 4b sont des vues en coupe schématique de la nacelle complète dans la position de la figure 4, prises respectivement dans les zones des demi-parties aval de structure interne, et des demi-tronçons de veine de flux froid ; et
- les figures 5a et 5b sont des vues en coupe schématique de la nacelle complète dans la position de la figure 5, prises respectivement dans les zones des demi-parties aval de structure interne, et des demi-tronçons de veine de flux froid.

Sur l'ensemble de ces figures, des références identiques ou analogues désignent des organes ou ensembles d'organes identiques ou analogues.

De plus, et afin de faciliter la lecture de l'orientation des figures les unes par rapport aux autres, on a placé sur chacune de ces figures un trièdre XYZ dont l'axe X est confondu avec l'axe de l'ensemble propulsif et orienté de l'aval vers l'amont de cet ensemble, ces deux termes « aval » et « amont » s'entendant par rapport à la circulation du flux d'air à l'intérieur de l'ensemble propulsif.

L'axe Z correspond à la direction verticale, et est orienté du bas vers le haut, et le plan transversal YZ est perpendiculaire à l'axe X.

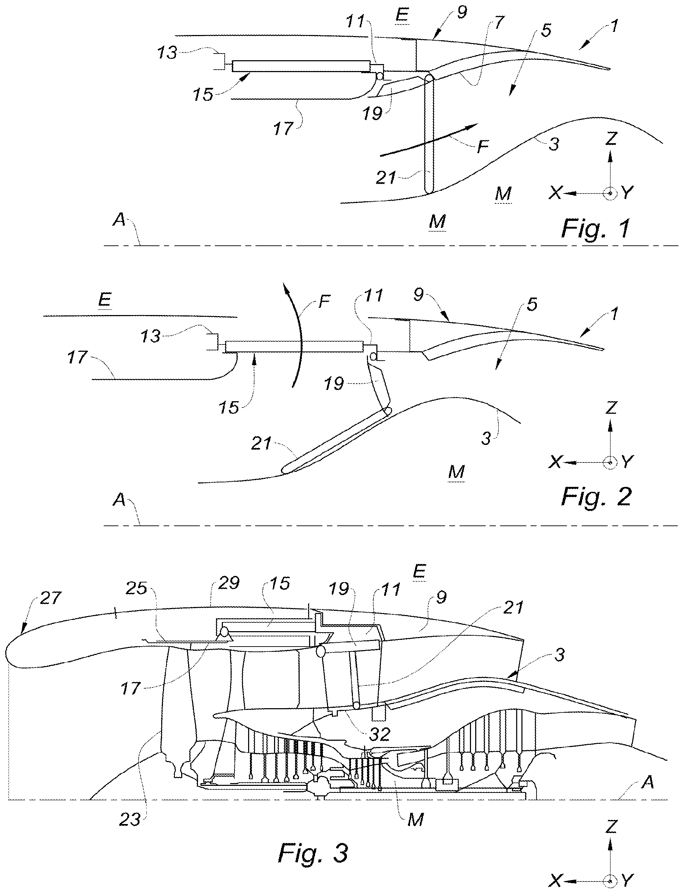

On se reporte à présent aux figures 1 et 2, représentant le fonctionnement classique d'un inverseur de poussée à grilles.

Comme cela est visible sur ces figures, l'ensemble propulsif 1 comprend, dans sa partie centrale, un moteur M tel qu'un turboréacteur, d'axe A. Ce moteur M est enveloppé par une structure interne de capotage 3 (souvent désignée par « IFS », pour « Inner Fan Structure »), qui réalise un carénage aérodynamique de ce moteur M et définit la paroi radialement intérieure d'une veine de flux froid 5.

Classiquement, cette structure interne de capotage 3 peut être réalisée par des panneaux métalliques ou en matériau composite, et peut comporter une fonction d'absorption des ondes acoustiques.

La paroi radialement extérieure de la veine de flux froid 5 comprend la paroi radialement intérieure 7 d'un capot 9 apte à coulisser axialement entre la position jet direct visible à la figure 1, et la position jet inverse visible à la figure 2.

Le capot 9 est rigidement lié à une structure annulaire aval 11, souvent désignée par les termes « cadre arrière » ou « cadre arrière de module inverseur de poussée », elle-même reliée rigidement à une structure annulaire amont 13, souvent désignée par les termes « cadre avant » ou « cadre avant de grilles », ces deux structures annulaires supportant une série de grilles 15 définissant elles-mêmes un agencement annulaire. Plus précisément, chaque moitié 9a ou 9b du capot 9 est reliée rigidement à une moitié correspondante 11a ou 11b du cadre arrière 11 de module inverseur de poussée, lequel cadre arrière 11 est formé ici par deux demi-viroles structurantes.

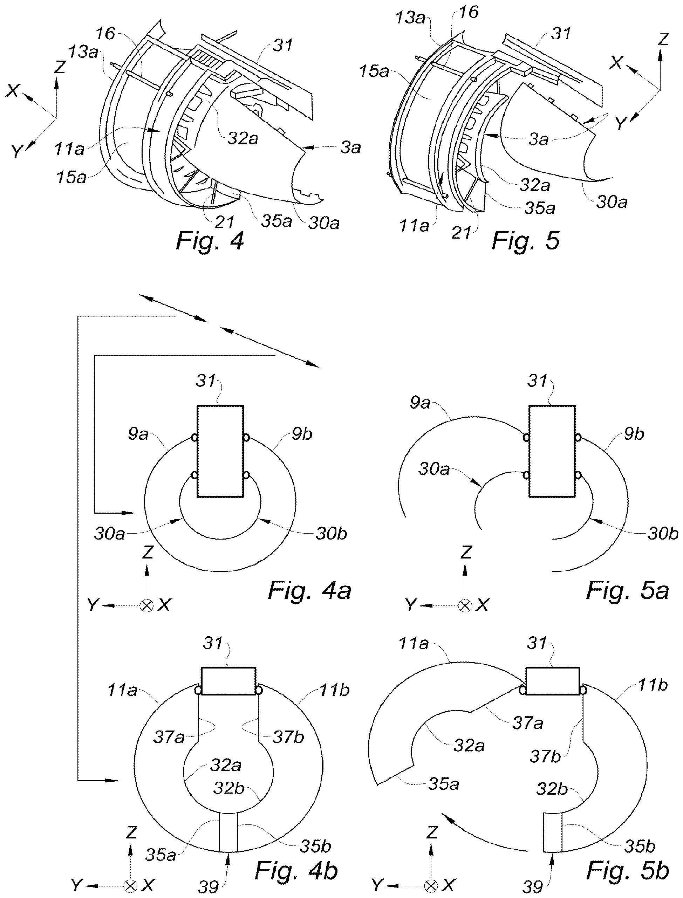

Le mouvement de coulissement de l'ensemble formé par le capot 9 et les grilles 15 est assuré par une pluralité de vérins (dont l'un portant la référence 16 est visible sur les figures 4 et 5) répartis à la périphérie de la partie fixe de l'ensemble propulsif, et plus particulièrement à la périphérie du carter intermédiaire 17 de la soufflante (non représentée) de l'ensemble propulsif. Sur les figures 4 et 5, le capot 9 a été volontairement omis pour faciliter la compréhension.

En outre, une pluralité de volets d'inversion de poussée 19, montés pivotants sur le cadre arrière 11, sur sensiblement toute la circonférence de celle-ci, sont reliés par des bielles 21 elles-mêmes articulées sur la structure interne 3.

Ainsi, dans la configuration jet direct représentée à la figure 1, ces volets 19 se trouvent dans le prolongement du carter intermédiaire 17 et de la paroi radialement intérieure 7 du capot 9, et dans la configuration jet inverse représentée à la figure 2, ces volets d'inversion de poussée 19 entravent la veine de flux froid 5, obligeant le flux d'air froid F à traverser les grilles 15, et à être redirigé vers l'extérieur E et vers l'amont de l'ensemble propulsif, réalisant ainsi la fonction d'inversion de poussée.

A des fins de clarification, on pourra noter ici que l'on distingue classiquement, dans l'ensemble propulsif 1, deux ensembles qui, dans la pratique, sont fabriqués de manière séparée, avant d'être finalement assemblés.

Le premier ensemble est formé par le moteur, comprenant notamment le moteur M à proprement parler, ainsi que la soufflante 23 (voir figure 3), le carter de soufflante 25 et le carter intermédiaire 17.

Le deuxième ensemble est formé par la nacelle, comprenant notamment l'entrée d'air 27 (voir figure 3), le capot de carter de soufflante 29, la structure interne 3, ainsi que la fonction d'inversion de poussée, comprenant dans l'exemple présent le capot coulissant 9, les grilles 15 et leurs cadres associés 11 et 13, les volets d'inversion de poussée 19 et leurs bielles d'actionnement 21.

Font également partie de la nacelle, et plus précisément d'une partie de la nacelle souvent appelée « berceau de nacelle », deux demi-poutres structurantes (voir ci-après) souvent désignées par les termes « cadres latéraux » (à savoir un cadre droit et un cadre gauche) ou « cadre monobloc » dans le cas d'une structure unitaire.

Ces deux demi-poutres structurantes comprennent des rails de guidage pour le coulissement du capot coulissant 9 auquel sont reliés les cadres arrière 11 et avant 13, et la structure interne 3. Les deux demi-poutres structurantes et les rails de guidage forment le berceau de nacelle, lequel est destiné à être fixé à un mât de suspension de l'ensemble propulsif, lui-même destiné à être fixé sur la voilure ou sur le fuselage d'un aéronef.

On se reporte à présent plus particulièrement aux figures 3, 4, 4a, 4b, 5, 5a, 5b, sur lesquelles on peut voir un ensemble propulsif selon l'invention.

Comme cela est visible sur les figures 4, 4a, 4b, 5, 5a, 5b, les grilles 15, leur cadre avant 13 et le cadre arrière 11 de module inverseur de poussée, ainsi que le capot coulissant 9 et la structure interne 3, comprennent en fait deux moitiés, respectivement 15a, 11a, 11b, 13a, 9a, 9b, 30a, 30b, 32a, 32b montées chacune pivotante sur sa demi-poutre structurante associée, (ces demi-poutres étant désignées par la référence commune unique 31 sur les figures 4, 4a, 4b, 5, 5a, 5b).

Plus précisément, chaque cadre arrière 11 se présente sous la forme d'une demi-virole structurante 11a, 11b, c'est-à-dire d'une demi-ceinture présentant une largeur selon la direction X nettement supérieure à la largeur d'un cadre arrière classique : ces demi-viroles structurantes sont en effet dimensionnées de manière à assurer la tenue et la rigidité de ce qui va être décrit dans ce qui suit comme étant un demi-tronçon de veine de flux froid.

Chaque demi-capot coulissant 9a, 9b est fixé de manière détachable à la demi-virole structurante 11a, 11b associée, et les volets d'inversion de poussée 19 sont montés articulés sur ces demi-viroles.

Chaque demi-structure interne 3a, 3b comprend respectivement une demi-structure interne aval 30a, 30b, et une demi-structure interne amont 32a, 32b, chacune de ces demi-structures internes aval et amont pouvant s'ouvrir indépendamment l'une de l'autre par pivotement autour de sa demi-poutre structurante 31, comme cela est visible sur les figures 5, 5a et 5b.

Les demi-structures internes amont 32a, 32b sont disposées au droit des demi-viroles structurantes 11a, 11b et des volets d'inversion de poussée 19, c'est-à-dire que ces demi-structures internes, ces demi-viroles et ces volets s'étendent axialement entre des plans transversaux (plans YZ) sensiblement communs.

Les bielles 21 d'actionnement des volets d'inversion de poussée 19 sont articulées d'une part sur ces volets, et d'autre part sur les demi-structures internes amont 32a, 32b.

Par ailleurs, et comme cela est visible notamment sur les figures 4b et 5b, chaque demi-virole 11a, 11b est reliée à sa demi-structure interne amont associée 32a, 32b à chacune de ses extrémités par des parois respectives 35a, 35b et 37a, 37b s'étendant dans des plans sensiblement parallèles au plan XZ.

De la sorte, chaque demi-ensemble comprenant le demi-cadre avant 13a, la moitié des grilles 15a, la demi-virole 11a, 11b, la demi-structure interne amont 32a, 32b, les parois de liaison 35a, 35b, 37a, 37b, ainsi que les volets d'inversion de poussée 19 et les bielles d'actionnement 21, forment un ensemble que l'on peut désigner comme étant un demi-tronçon de veine de flux froid, ayant sa rigidité propre.

Cette rigidité permet notamment d'ouvrir ces demi-tronçons de veine de flux froid vers l'extérieur de l'ensemble propulsif 1 pour les opérations de maintenance, en les faisant pivoter par rapport à leur demi-poutre structurante associée 31.

Les demi-tronçons de veine de flux froid présentent une section dans un plan transversal YZ qui fait penser à la lettre « D », aussi appelle-t-on couramment ce genre de structure un « D-duct ».

L'ouverture de ces demi-tronçons de veine de flux froid permet d'accéder à des organes difficilement accessibles autrement, à la périphérie du moteur M, tels que par exemple une boîte d'accessoires (couramment désignée par le terme anglo-saxon « accessory gearbox » et son acronyme AGB) permettant d'entraîner en rotation divers équipements de l'ensemble propulsif tels que des pompes ou encore un générateur électrique.

L'ouverture de ces demi-tronçons de veine de flux froid ne nécessite aucun démontage des volets d'inversion de poussée 19, ni des bielles 21.

Lorsque ces demi-tronçons de veine de flux froid sont en position de service, c'est-à-dire en position fermée, ils s'appuient sur et de part et d'autre de la bifurcation 39, qui est une partie fixe de l'ensemble propulsif 1 permettant le passage de différentes servitudes, telles que des conduits et des câbles.

Le maintien en position fermée des demi-tronçons de veine de flux froid s'effectue au moyen de verrous coopérant avec cette bifurcation 39.

Cette bifurcation 39 s'étend axialement, c'est-à-dire selon la direction X, sur une longueur sensiblement égale à la largeur des demi-viroles 11a, 11b.

Cela signifie en particulier que cette bifurcation s'interrompt axialement au niveau d'un bord d'extrémité amont des demi-structures internes aval 30a, 30b, limitant ainsi l'impact aérodynamique sur la circulation d'air à l'intérieur de la veine de flux froid dans cette zone.

Lorsqu'on souhaite en outre intervenir sur la partie du moteur située sous ces demies-structures internes aval 30a, 30b, qui définissent en position de service un tronçon aval de veine de flux froid, on procède à leur ouverture par pivotement autour de leurs demi-poutres structurantes associées 31, comme cela est visible sur les figures 5 et 5a.

Le maintien en position fermée de ces demi-structures interne aval 30a, 30b s'effectue par verrouillage directement l'une sur l'autre, au moyen de verrous appropriés.

Les demi-capots 9a, 9b et les demi-structures internes fixes 30a, 30b présentent une section dans un plan transversal YZ qui fait penser à la lettre «C », aussi appelle-t-on couramment ce genre de structure un « C-duct ».

Bien entendu, la présente invention n'est nullement limitée au mode de réalisation décrit et représenté, fourni à titre de simple exemple.

## Revendications

1. Ensemble propulsif à double flux, comprenant :
- un moteur (M) et,
- disposée autour de ce moteur, une nacelle définissant une veine de flux froid (5), cette nacelle comportant :
- un berceau de nacelle (31), destiné à être relié à un mât de suspension dudit ensemble propulsif,
- un inverseur de poussée comprenant des grilles (15) et au moins un capot (9), montés coulissants par rapport au berceau de nacelle (31), ainsi que des volets d'inversion de poussée (19) et des bielles (21) d'actionnement de ces volets (19),
- une structure interne (3) enveloppant ledit moteur (M), et définissant, avec ledit capot mobile (9), une partie de ladite veine de flux froid (5),
- une bifurcation (39) de passage de servitudes s'étendant entre ledit moteur (M) et l'extérieur de ladite nacelle, diamétralement opposée audit berceau de nacelle (31),
où :
- ledit inverseur de poussée comprend deux demi-viroles structurantes (11a, 11b) disposées en aval desdites grilles (15) et solidaires de celles-ci,
- ladite structure interne (3) comprend deux demi-structures internes amont (32a, 32b), reliées par leurs extrémités (35a, 35b, 37a, 37b) auxdites demi-viroles (11a, 11b) de sorte à former deux demi-tronçons de veine de flux froid, ces deux demi-tronçons étant montés pivotants sur ledit berceau de nacelle,
cet ensemble propulsif étant **caractérisé en ce que** :
- lesdits volets d'inversion de poussée (19) sont montés articulés sur lesdites demi-viroles (11a, 11b),
- lesdites bielles (21) sont montées articulées sur lesdits volets d'inversion de poussée (19) et sur lesdites demi-structures internes amont (32a, 32b),
- lesdits demi-tronçons de veine de flux froid sont mobiles entre une position de service dans laquelle ils s'appuient sur et de part et d'autre de ladite bifurcation (39), et une position de maintenance, dans laquelle ils sont pivotés vers l'extérieur de la nacelle, permettant l'accès à la partie du moteur (M) située sous lesdites demi-structures internes amont (32a, 32b).

2. Ensemble propulsif selon la revendication 1, **caractérisé en ce que** ledit capot (9) comprend deux demi-capots (9a, 9b), **en ce que** la partie de ladite structure interne (3) située en aval desdits demi-structures internes amont (32a, 32b) comprend elle-même deux demi-structures internes aval (30a, 30b), et **en ce que** lesdits demi-capots (9a, 9b) d'une part, et lesdites demi-structures internes aval (30a, 30b) sont montés pivotants respectivement sur ledit berceau de nacelle (31) entre une position de service dans laquelle ces demi-capots (9a, 9b) et ces demi-structures internes aval (30a, 30b) sont respectivement jointifs bords-à-bords en aval de ladite bifurcation (39) et définissent un tronçon aval de veine de flux froid, et une position de maintenance dans laquelle ils sont pivotés vers l'extérieur de la nacelle, permettant l'accès à la partie du moteur (M) située sous lesdites demi-structures internes aval (30a, 30b).

3. Ensemble propulsif selon la revendication 1 ou 2, **caractérisé en ce que** ladite bifurcation (39) s'étend axialement sur une longueur correspondant sensiblement à celle desdits demi-tronçons de veine de flux froid.

4. Ensemble propulsif selon l'une quelconque des revendications précédentes, **caractérisé en ce que** les demi-tronçons de veine de flux froid présentent une section dans un plan transversal (YZ) par rapport à un axe de l'ensemble propulsif en forme de « D », aussi appelée « D-duct ».

5. Ensemble propulsif selon l'une quelconque des revendications précédentes, **caractérisé en ce que** les demi-capots (9a, 9b) et les demi-structures internes fixes (30a, 30b) présentent une section dans un plan transversal (YZ) par rapport à un axe de l'ensemble propulsif en forme de «C », aussi appelée « C-duct ».

6. Ensemble propulsif selon l'une quelconque des revendications précédentes, **caractérisé en ce qu'**il comprend des verrous coopérant avec ladite bifurcation (39) pour effectuer le maintien en position fermée des demi-tronçons de veine de flux froid.

## Patentansprüche

1. Turbolüfterantriebsanordnung, umfassend:
- einen Motor (M) und,
- um diesen Motor herum angeordnet, eine Gondel, die eine Kaltflussader (5) definiert, wobei diese Gondel umfasst:
- - ein Gondelgestell (31), das dazu bestimmt ist, mit einem Aufhängemast der Antriebsanordnung verbunden zu werden,
- - einen Schubumkehrer, umfassend Leitschaufeln (15) und mindestens eine Haube (9), die relativ zum Gondelgestell (31) verschiebbar montiert ist, sowie Schubumkehrklappen (19) und Stangen (21) zur Betätigung dieser Klappen (19),
--eine innere Struktur (3), die den Motor (M) umhüllt und mit der beweglichen Haube (9) einen Teil der Kaltflussader (5) definiert,
- eine Gabelung (39) für den Durchgang von Hilfsmitteln, die sich zwischen dem Motor (M) und der Außenseite der Gondel erstrecken, diametral gegenüberliegend dem Gondelgestell (31),
wo:
- der Schubumkehrer zwei strukturierende Halbschalen (11a, 11b) umfasst, die stromabwärts der Leitschaufeln (15) angeordnet und einstückig mit diesen sind,
- die innere Struktur (3) zwei innere Halbstrukturen stromaufwärts (32a, 32b) umfasst, die mit ihren Enden (35a, 35b, 37a, 37b) mit den Halbschalen (11a, 11b) verbunden sind, um zwei Kaltflussader-Halbabschnitte zu bilden, wobei diese beiden Halbabschnitte schwenkbar am Gondelgestell montiert sind, wobei diese Antriebsanordnung **dadurch gekennzeichnet ist, dass**:
- - die Schubumkehrklappen (19) gelenkig an den Halbschalen (11a, 11b) montiert sind,
- - die Stangen (21) gelenkig an den Schubumkehrklappen (19) und an den stromaufwärts gelegenen inneren Halbstrukturen (32a, 32b) montiert sind,
- - die Halbabschnitte der Kaltflussader zwischen einer Betriebsposition, in der sie auf und beiderseits der Gabelung (39) anliegen, und einer Wartungsposition, in der sie zur Außenseite der Gondel geschwenkt sind, beweglich sind, die den Zugang zu dem Teil des Motors (M) ermöglicht, der sich unter den stromaufwärts liegenden inneren Halbstrukturen (32a, 32b) befindet.

2. Antriebsanordnung nach Anspruch 1, **dadurch gekennzeichnet, dass** die Haube (9) zwei Halbhauben (9a, 9b) umfasst, dadurch, dass der Teil der inneren Struktur (3), der stromabwärts der stromaufwärts liegenden inneren Halbstrukturen (32a, 32b) liegt, selbst zwei stromabwärts liegende innere Halbstrukturen (30a, 30b) umfasst, und dadurch, dass die Halbhauben (9a, 9b) einerseits, und die stromabwärts liegenden inneren Halbstrukturen (30a, 30b) jeweils schwenkbar am Gondelgestell (31), zwischen einer Betriebsposition, in der diese Halbhauben (9a, 9b) und diese stromabwärts liegenden inneren Halbstrukturen (30a, 30b) jeweils Kante an Kante aneinandergesetzt stromabwärts der Gabelung (39) sind, und einen stromabwärts liegenden Abschnitt der Kaltflussader definieren, und einer Wartungsposition, in der sie zur Außenseite der Gondel geschwenkt sind, montiert sind, die den Zugang zu dem Teil des Motors (M) ermöglicht, der sich unter den stromabwärts liegenden inneren Halbstrukturen (30a, 30b) befindet.

3. Antriebsanordnung nach Anspruch 1 oder 2, **dadurch gekennzeichnet, dass** sich die Gabelung (39) axial über eine Länge erstreckt, die im Wesentlichen jener der Halbabschnitte der Kaltflussader entspricht.

4. Antriebsanordnung nach einem der vorstehenden Ansprüche, **dadurch gekennzeichnet, dass** die Halbabschnitte der Kaltflussader einen Querschnitt in einer querlaufenden Ebene (YZ) in Bezug auf eine Achse der Antriebsanordnung in Form eines "D", auch "D-Kanal" genannt, aufweisen.

5. Antriebsanordnung nach einem der vorstehenden Ansprüche, **dadurch gekennzeichnet, dass** die Halbhauben (9a, 9b) und die festen inneren Halbstrukturen (30a, 30b) einen Querschnitt in einer querlaufenden Ebene (YZ) in Bezug auf eine Achse der Antriebsanordnung in Form eines "C", auch "C-Kanal" genannt, aufweisen.

6. Antriebsanordnung nach einem der vorstehenden Ansprüche, **dadurch gekennzeichnet, dass** sie Riegel umfasst, die mit der Gabelung (39) zusammenwirken, um den Halt in geschlossener Position der Halbabschnitte der Kaltflussader zu bewerkstelligen.

## Claims

1. A bypass propulsion unit, comprising:
- an engine (M), and
- disposed around this engine, a nacelle defining a cold flow path (5), this nacelle including:
- a nacelle cradle (31), intended to be linked to a suspension pylon of said propulsion unit,
- a thrust reverser comprising cascades (15) and at least one cowl (9), slidably mounted relative to the nacelle cradle (31), as well as thrust reverser flaps (19) and connecting rods (21) for actuating these flaps (19),
- an inner structure (3) wrapping said engine (M), and defining, with said movable cowl (9), a portion of said cold flow path (5),
- a bifurcation (39) for the passage of piping extending between said engine (M) and the outside of said nacelle, diametrically opposite to said nacelle cradle (31),
where
- said thrust reverser comprises two structural half-shrouds (11a, 11b) disposed downstream of said cascades (15) and secured thereto,
- said inner structure (3) comprises two upstream inner half-structures (32a, 32b), linked by their ends (35a, 35b, 37a, 37b) to said half-shrouds (11a, 11b) so as to form two half-sections of the cold flow path, these two half-sections being pivotally mounted on said nacelle cradle,
this propulsion unit being **characterized in that**:
- said thrust reverser flaps (19) are hingedly mounted on said half-shrouds (11a, 11b),
- said connecting rods (21) are hingedly mounted on said thrust reverser flaps (19) and on said upstream inner half-structures (32a, 32b),
- said half-sections of the cold flow path are movable between a service position in which they bear on and on either side of said bifurcation (39), and a maintenance position, in which they are pivoted outwards of the nacelle, enabling access to the portion of the engine (M) located below said upstream inner half-structures (32a, 32b).

2. The propulsion unit according to claim 1, **characterized in that** said cowl (9) comprises two half-cowls (9a, 9b), **in that** the portion of said inner structure (3) located downstream of said upstream inner half-structures (32a, 32b) comprises, in turn, two downstream inner half-structures (30a, 30b), and **in that** said half-cowls (9a, 9b) on the one hand, and said downstream inner half-structures (30a, 30b) are pivotally mounted respectively on said nacelle cradle (31) between a service position in which these half-cowls (9a, 9b) and these downstream inner half-structures (30a, 30b) are respectively joined edge-to-edge downstream of said bifurcation (39) and defining a downstream section of the cold flow path, and a maintenance position in which they are pivoted outwards of the nacelle, enabling access to the portion of the engine (M) located below said downstream inner half-structures (30a, 30b).

3. The propulsion unit according to claim 1 or 2, **characterized in that** said bifurcation (39) extends axially over a length corresponding substantially to that of said half-sections of the cold flow path.

4. The propulsion unit according to any one of the preceding claims, **characterized in that** the half-sections of the cold flow path have a cross-section in a transverse plane (YZ) with respect to an axis of the propulsion unit in the shape of the letter « D », also called « D-duct ».

5. The propulsion unit according to any one of the preceding claims, **characterized in that** the half-cowls (9a, 9b) and the inner fixed half-structures (30a, 30b) have a cross-section in a transverse plane (YZ) with respect to an axis of the propulsion unit in the shape of the letter « C », also called « C-duct »

6. The propulsion unit according to any one of the preceding claims, **characterized in that** it comprises locks cooperating with said bifurcation (39) in order to perform the holding of the cold flow path half-sections in the closed position.
